# EUROPEAN PATENT SPECIFICATION

(11) **EP 3 687 297 B1**
(45) Date of publication and mention of the grant of the patent: **20.03.2024**
(21) Application number: 18783572.3
(22) Date of filing: 11.09.2018
(51) Int. Cl.: A22C 21/02

(54) **PICKING DEVICE**
KOMMISSIONIERVORRICHTUNG
DISPOSITIF DE SAISIE

(30) Priority: 28.09.2017 IT 201700108717
(43) Date of publication of application: 05.08.2020
(73) Proprietor: S.B. Impianti S.r.l., 25018 Montichiari, Brescia (IT)
(72) Inventor: CAVALLANTI, Antonello, 24125 Bergamo (IT)
(74) Representative: Crippa, Paolo Ernesto
(86) International application number: PCT/IB2018/056910
(87) International publication number: WO 2019/064097

(56) References cited:
- Whizbang Chicken Plucker: "Anyone Can Build AWhizbang Chicken Plucker: Introducing... The Stachoviak Plucker Finger Puller", , 25 March 2012 (2012-03-25), XP055486566, Retrieved from the Internet: URL:http://whizbangplucker.blogspot.com/20 10/04/coming-soon.html [retrieved on 2018-06-21]
- C.G Manufacturing & Distributing Inc.: "Finger Puller", , 16 December 2016 (2016-12-16), XP055486548, Retrieved from the Internet: URL:http://www.cgmfg.ca/finger-puller [retrieved on 2018-06-21]

## Description

The present invention relates to a device for picking up plucking fingers.

It is known that the industrial removal of poultry feathers takes place by means of special machines which provide to pluck every strand.

In a known arrangement of such apparatuses, chickens or turkeys are, so to speak, "caressed" by a plurality of fingers mounted in a radial position, integrally rotating on motorized rollers, so that the plumage is separated from the chicken or turkey through the rotary motion of the fingers.

For example, fingers of a known type are discussed in publications GB945869A or GB938140A. Other documents which disclose these devices are "Anyone Can Build A Whizbang Chicken Plucker: Introducing. The Stachoviak Plucker Finger Puller", which is considered as disclosing the preamble to claim 1, and "Finger Puller" from C.G. Manufacturing & Distribution.

This removal operation, however, is extremely deteriorating for the fingers, so that they need to be replaced periodically when they break or otherwise become ineffective.

However, the replacement of the fingers in the machine takes place in conditions that are difficult for the operators, so that the manual removal operation requires many hours/man.

The present invention therefore falls within the foregoing context, aiming to provide a device that is capable of rapidly and effortlessly removing mainly the plucking fingers and optionally also components of elongated shape of a different type.

Such an object is achieved by a device according to claim 1. The dependent claims describe preferred embodiment variants.

The object of the present invention will now be described in detail, with the aid of the accompanying drawings, in which:

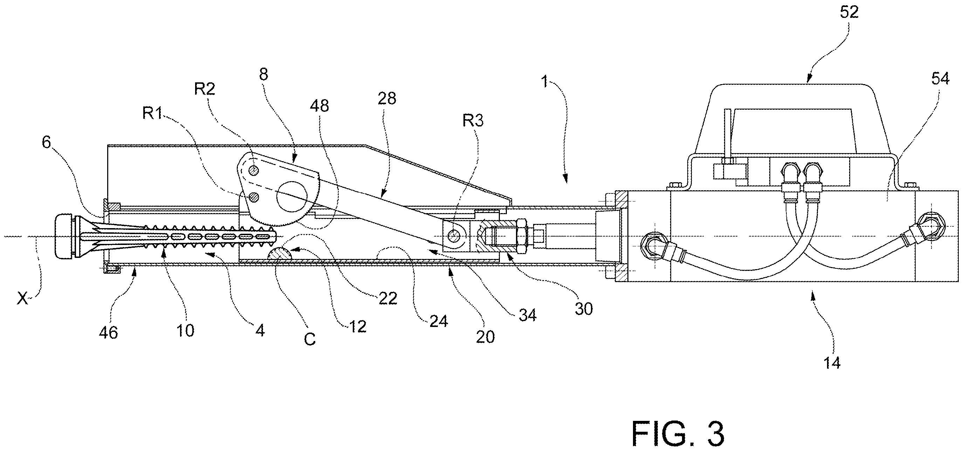

- figures 1, 2, 3 respectively show a top perspective view, a side view and a partially sectional side view of a picking device object of the present invention, according to a possible embodiment;

- figures 4 and 5 respectively show an enlargement of a working portion of the device in figure 1, in the absence of the protective casing, and an exploded view of the working portion;

- figure 6 shows a detail of the gripping members of the device in figure 4;

- figures 7a to 7f show a pick-up sequence of the device object of the present invention, according to a possible embodiment.

Reference numeral 1 denotes, as a whole, a device for picking plucking fingers 10. For example, such a finger/article may be at least partially made of an elastomeric material.

Such a device 1 comprises a working portion 2, at least a pair of gripping members 8, 12 and motor means 14.

According to an embodiment, this device is a portable gun device.

It should be noted that the term "portable" refers to a device that is sufficiently compact and of a reasonably reduced weight as to be lifted from the ground (with one or two hands), so as to be directed towards the desired area of use.

The working portion 2 delimits an inner compartment 4 that extends along a prevailing extension axis X to at least partially accommodate the finger/article 10 (for example: substantially complete), and a distal opening 6 for inserting such a finger 10 into the inner compartment 4.

In the illustrated embodiments, the working portion 2 comprises a device body 46 of substantially tubular shape.

According to an embodiment, the device body 46 may be at least partially made of metal.

It is specified that, in the present description, the term "proximal" will be referred to the parts positioned or directed towards the motor means, and therefore towards the user of the present device. On the contrary, the term "distal" denotes the parts positioned or directed towards the end of the working portion 2 opposite to the motor means 14, and thus towards the plucking finger 10 or the article.

Again with regard to the terminology used, the terms "axial" or "radial" will always refer to the prevailing development axis X, unless otherwise specified.

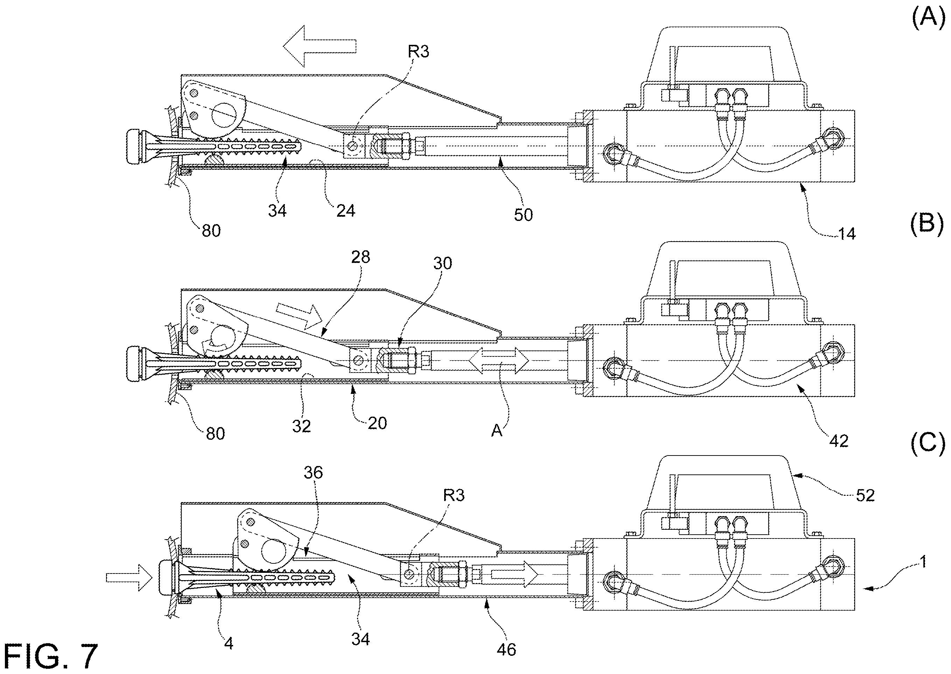

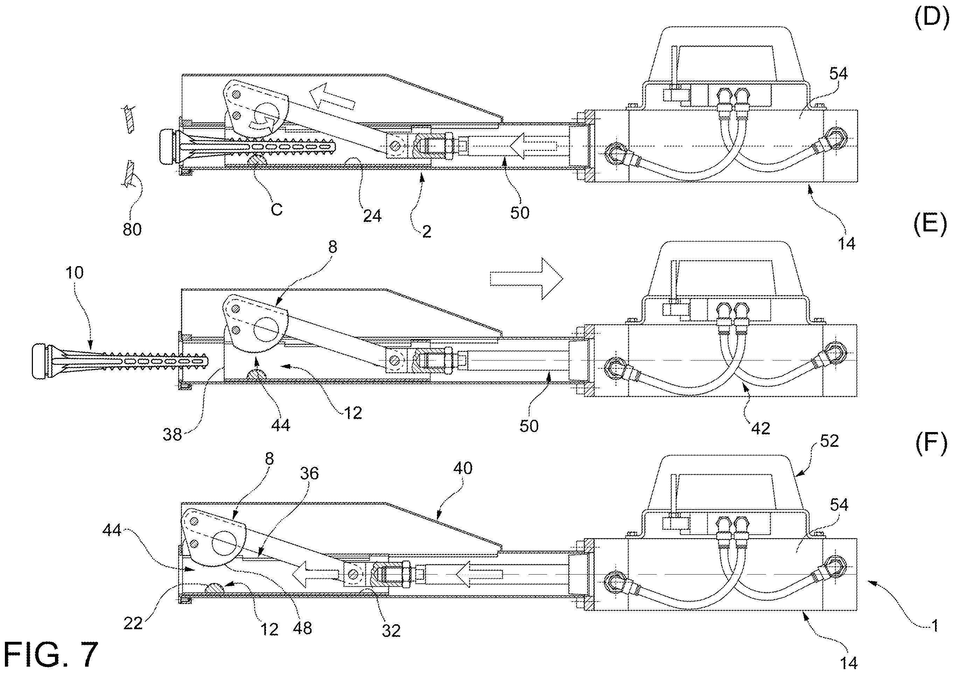

At least one of the pair of gripping members 8, 12 is movable between an insertion position (for example shown in figure 7f) of the finger 10, wherein the movable gripping member 8 is spaced apart from the other gripping member 12, and a holding position (figure 7a), wherein such gripping members 8, 12 cooperate to hold the finger 10 in the inner compartment 4, and vice versa.

According to an embodiment, in the insertion position the gripping members 8, 12 delimit a gap 44 therebetween which is sufficiently large to allow the introduction of the finger, or of the article, therebetween.

In the holding position the movable gripping member 8 is adjacent to the other gripping member 12.

More precisely, in the holding position, working surfaces 48, 22 delimited by the gripping members 8, 12 work in the form of a vice on the finger 10 or article.

According to the embodiments shown, in the transitions between the insertion position and the holding position, the other gripping member 12 remains fixed, i.e. substantially integral with the device body 46 of the working portion 2.

One or both gripping members 8, 12 are further movable between a rest position (see for example figure 7b) and a pick-up position (figure 7d), wherein the at least one gripping member 8, 12 is moved *proximally -* according to the above definition - in the inner compartment 4, and vice versa.

According to the embodiments shown, both gripping members 8, 12 are movable proximally towards the pick-up position, or distally towards the rest position, with an alternating motion.

The motor means 14 therefore provide for the movement of the movable gripping member 8 from the insertion position to the holding position, and for the movement of one or both gripping members 8, 12 from the rest position to the pick-up position of the plucking finger 10 or of the article.

According to an embodiment, the motor means 14 comprise a single motor unit 42 for both such movements, that is to say, for moving the movable gripping member 8 from the insertion position to the holding position (and vice versa), and for moving the at least one gripping member 8, 12 from the rest position to the pick-up position of the finger 10 (and vice versa).

According to an embodiment, the motor means 14 comprise a motor unit 42 with a linear actuator 50, or with a rotary actuator activated hydraulically, mechanically or pneumatically.

In the illustrated embodiments, the motor unit 42 is driven pneumatically or hydraulically.

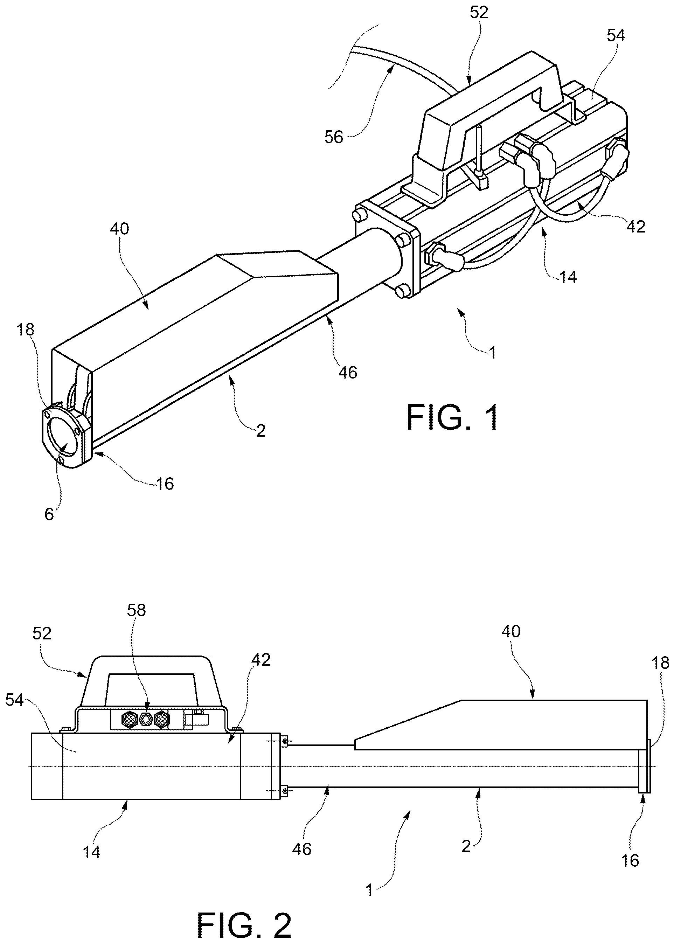

In this regard, according to an embodiment, a supply duct 56 - for example schematised and visible in figure 1 - may be connected to an inlet port 58 (figure 2) of the motor unit 42 in order to fluidically supply the latter.

According to an embodiment, the linear actuator 50 or the rotary actuator may protrude partially in the inner compartment 4.

According to an embodiment, the motor means 14 comprise a gripping portion 52 for lifting and orienting the device 1.

According to an embodiment, the gripping portion 52 is fixed to a casing 54 of the motor unit 42.

The working portion 2 comprises a free edge 16 which delimits an abutment surface 18, for example of an annular shape.

According to this variant, this surface 18 is used to provide an abutment between the working portion 2 and a surface 80, for example of a plucking machine not shown, which at least partially surrounds the finger 10 or the article.

According to an embodiment, the abutment surface 18 partially circumscribes the distal opening 6.

The motion of the gripping member 8, 12 towards the pick-up position occurs while moving away from the abutment surface 18.

The motor means 14 may be controlled - for example mechanically - so that the gripping member 8, 12 is moved towards the pick-up position only upon reaching the holding position, and therefore only after that the gripping members have firmly engaged the finger or the article.

The movable gripping member 8 is rotatably mounted (about a rotation axis R1) to a guide element 20 of the working portion 2, between the holding position and the insertion position.

The guide element 20 is slidably mounted along the prevailing development axis X.

The guide element 20 is slidably mounted integrally with the gripping member 8, 12 towards the pick-up position and, of course, also in the opposite direction towards the rest position.

According to an embodiment, the guide element 20 comprises a substantially cylindrical body 32 defining a cylinder compartment 34, for example arranged coaxially with the inner compartment 4.

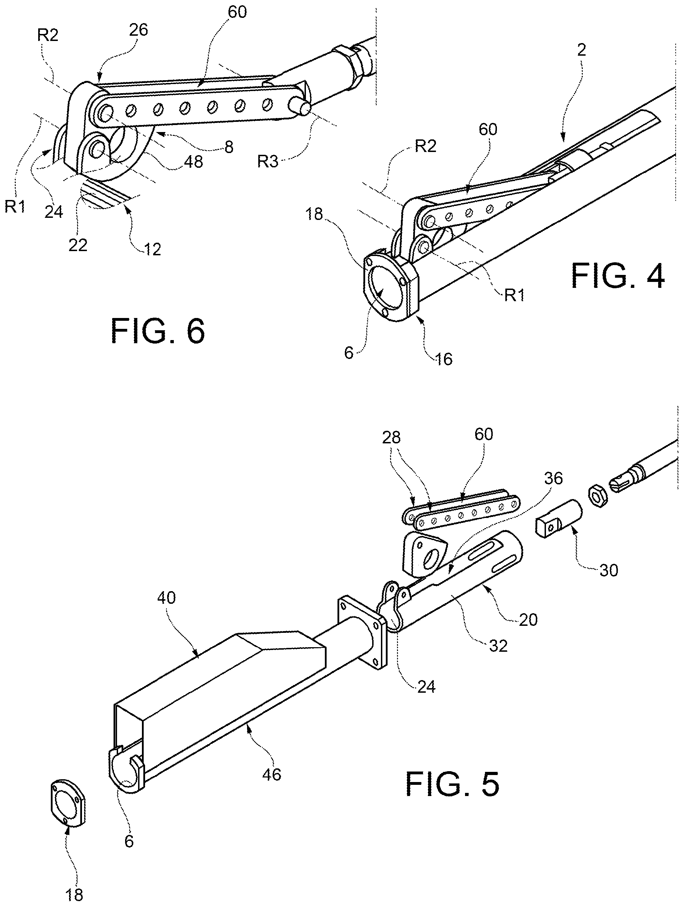

According to an embodiment, the substantially cylindrical body 32 identifies in its thickness at least one longitudinal slit 36 (for example visible in the exploded view in figure 5) through which the gripping member 8 is movable between the insertion position and the holding position.

According to an embodiment, the working portion 2 comprises a guide element 20 which delimits a working surface 22 of the other gripping member 12.

According to an embodiment not shown, the working surface is substantially planar or concave with its own concavity facing the movable gripping member.

According to an embodiment, the working surface 22 may be moved proximally in the inner compartment 4 in a manner integral with the guide element 20.

It follows that, in this variant, both gripping members 8, 12 with the respective working surfaces are movable towards the pick-up position.

According to an embodiment, the guide element 20 delimits a concave surface 24 within which the working surface 22 is at least partially received.

According to an embodiment, the guide element 20 delimits a concave surface 24 within which the working surface 22 is at least partially received.

According to an embodiment, the working surface 22 is semi-cylindrical with a semi-cylinder axis C substantially orthogonal to the prevailing development axis X discussed above.

According to an embodiment, the guide element 20 is received in a sliding/translatable manner in the inner compartment 4, specifically between a distal positioning (figure 7b; corresponding to the rest position) and a proximal positioning (figure 7d; corresponding to the pick-up position).

According to an embodiment, the guide element 20 is moved between the rest position and the pick-up position, and vice versa, through an axial movement A of the motor means 14.

According to an embodiment, the guide element 20 is kinematically connected to the motor means 14 through the movable gripping member 8.

More precisely, the guide member 20 may be hinged (about the axis of rotation R1) at one end 24 to the guide element 20 and may be hinged (about the axis of rotation R2, for example parallel to R1) at another end 26 to the motor means 14 by means of one or more optional transmission elements 28, 30.

According to an embodiment, the guide element 20 delimits a distal access opening 38 through which the finger 10 can be introduced into a cylinder compartment 34 delimited by said element 20 to be retained by the gripping members 8, 12.

It follows that the holding in this variant takes place inside or at the element 20.

According to an embodiment, the longitudinal slit 36 partially houses the movable gripping member 8 and at least one transmission element 28 for the movement of the motor means 14.

According to an embodiment, a pair of transmission elements 28 are provided, mutually side by side and which delimit an intermediate space 60 in which the movable gripping member 8 is partially housed.

For example, one or the pair of transmission elements 28 may be hinged distally to the gripping member 8 (around the aforementioned axis R2), and may advantageously be hinged proximally (around a rotation axis R3) to the linear actuator 50 or rotary actuator.

Optionally, between the linear actuator 50 or the rotary actuator and the transmission element 28, a further transmission element 30 may be mounted proximally on the actuator and hinged distally to the transmission element 28 or to the plurality thereof.

According to an embodiment, the movable gripping member 8 projects partially out of the inner compartment 4, in particular in a radial direction.

According to an embodiment, the working portion 2 comprises a protective casing 40 alongside the inner compartment 4 and in which the gripping member 8 is movable or slidable at least between the rest position and the pick-up position.

Innovatively, the device according to the present invention allows solving the drawbacks complained in relation to the prior art.

In particular, this device provides a motorized system for the extraction of the plucking fingers from the relative machine, guaranteeing a speed of extraction (and therefore of replacement) of said components which was previously unexpected.

Advantageously, the device object of the present invention allows obtaining a substantially zero extraction effort for the operator, by virtue of the release of the tractive forces along the working portion.

Advantageously, in the device object of the present invention the attainment of the various operating positions are essentially ensured by the effective grip of the finger or article between the gripping portions.

Advantageously, the device object of the present invention has a compact size and weight, which make it extremely manageable even in the most difficult or cramped working conditions.

Advantageously, the device object of the present invention is extremely safe to use, since the moving parts are substantially inaccessible from the outside.

Advantageously, the device object of the present invention allows easy extraction of the fingers or article, with a simple and malfunction-proof mechanism.

Advantageously, the device object of the present invention may be operated only with a fluid intake, that is, in the absence of an availability of electrical energy.

A man skilled in the art may make several changes or replacements of elements with other functionally equivalent ones to the embodiments of the above device in order to meet specific needs.

Also such variants are included within the scope of protection as defined by the following claims.

Moreover, each variant described as belonging to a possible embodiment may be implemented independently of the other variants described.

## Claims

1. A device (1) for picking up plucking fingers (10), comprising:
- a working portion (2) which delimits an inner compartment (4) that extends along a prevailing extension axis (X) to at least partially accommodate a plucking finger (10), and a distal opening (6) for inserting said plucking finger (10) into the inner compartment (4);
- at least one pair of gripping members (8, 12), at least one of which is movable between an insertion position (Fig. 7f) of the plucking finger (10), wherein the movable gripping member (8) is spaced apart from the other gripping member (12), and a holding position (Fig. 7a), wherein said members (8, 12) cooperate to hold the finger (10) in the inner compartment (4), and vice versa; wherein one or both gripping members (8, 12) are further movable between a rest position (Fig. 7b) and a pick-up position (Fig. 7d), wherein said at least one gripping member (8, 12) is moved proximally in the inner compartment (4), and vice versa; **characterised in that** the device further comprises:
- motor means (14) for moving the movable gripping member (8) from the insertion position to the holding position, and for moving one or both gripping members (8, 12) from the rest position to the pick-up position of the plucking finger (10),
the working portion (2) comprises a free edge (16) which delimits an abutment surface (18), for example of an annular shape, which at least partially circumscribes the distal opening (6), and wherein the movement of the gripping member (8, 12) towards the pick-up position occurs while moving away from said surface (18),
wherein the movable gripping member (8) is adjacent to the other gripping member (12) in the holding position, and wherein the motor means (14) are manageable so that the gripping member (8, 12) is moved towards the pick-up position only after the holding position is reached,
wherein the movable gripping member (8) is rotatably mounted (about an axis R1) on a guide element (20) of the working portion (2) between the holding position and the insertion position, and wherein the guide element (20) is slidably mounted along the prevailing extension axis (X), integral with the gripping member (8, 12) towards the pick-up position.

2. Device according to any one of the preceding claims, wherein the working portion (2) comprises a guide element (20) which delimits a working surface (22) of the other gripping member (12), and wherein said working surface (22) is movable proximally in the inner compartment (4) integral to the guide element (20).

3. Device according to the preceding claim, wherein the guide element (20) delimits a concave surface (24) within which the working surface (22) is at least partially housed, and wherein the latter is semi-cylindrical with a semi-cylinder axis (C) substantially orthogonal to the prevailing extension axis (X).

4. Device according to claims 1 or 2, wherein the guide element (20) is slidably/movably housed in the inner compartment (4) and is moved between the rest position and the pick-up position, and vice versa, through an axial movement (A) of the motor means (14).

5. Device according to any one of the preceding claims, wherein the guide element (20) is kinematically connected to the motor means (14) through the movable gripping member (8), said member being hinged (R1) on one end (24) to the guide element (20) and hinged (R2) on another end (26) to the motor means (14) by means of one or more optional transmission elements (28, 30).

6. Device according to any one of the preceding claims, wherein the guide element (20) comprises a substantially cylindrical body (32) delimiting a cylinder compartment (34), wherein said body (32) defines in its own thickness at least one longitudinal slit (36) through which the gripping member (8) is movable between the insertion position and the holding position.

7. Device according to any one of the preceding claims, wherein the guide element (20) delimits a distal access opening (38) through which the plucking finger (10) may be inserted into a cylinder compartment (34) delimited by said element (20) to be held by the gripping members (8, 12) .

8. Device according to claims 5 and 6, wherein the longitudinal slit (36) partially houses the movable gripping member (8) and at least one transmission element (28) for the movement of the motor means (14).

9. Device according to any one of the preceding claims, wherein the movable gripping member (8) protrudes partially outside the inner compartment (4), and wherein the working portion (2) comprises a protective casing (40) alongside the inner compartment (4) and in which the gripping member (8) is movable or slidable at least between the rest position and the pick-up position.

10. Device according to any one of the preceding claims, wherein the motor means (14) comprise a single motor unit (42) for moving the gripping member (8) from the insertion position to the holding position, and vice versa, and for moving the at least one gripping member (8, 12) from the rest position to pick-up position of the plucking finger (10), and vice versa.

11. Device according to any one of the preceding claims, wherein the motor means (14) comprise a motor unit (42) with a linear actuator (50) or with a rotary actuator activated hydraulically, mechanically or pneumatically.

12. Device according to any one of the preceding claims, **characterized in that** it is a portable gun device.

## Patentansprüche

1. Vorrichtung (1) zum Aufnehmen von Rupffingern (10), umfassend:
- einen Arbeitsabschnitt (2), der ein Innenfach (4), das sich entlang einer vorherrschenden Erstreckungsachse (X) erstreckt, um zumindest teilweise einen Rupffinger (10) aufzunehmen, und eine distale Öffnung (6) zum Einführen des Rupffingers (10) in das Innenfach (4) begrenzt;
- zumindest ein Paar Greifglieder (8, 12), von denen zumindest eines zwischen einer Einführposition (Fig. 7f) des Rupffingers (10), wobei das bewegliche Greifglied (8) von dem anderen Greifglied (12) beabstandet ist, und einer Halteposition (Fig. 7a) bewegbar ist, wobei die Glieder (8, 12) zusammenwirken, um den Finger (10) in dem Innenfach (4) zu halten, und umgekehrt; wobei eines oder beide Greifglieder (8, 12) ferner zwischen einer Ruheposition (Abb. 7b) und einer Aufnahmeposition (Abb. 7d) bewegbar sind, wobei das zumindest eine Greifglied (8, 12) proximal in dem Innenfach (4) bewegt wird, und umgekehrt;
**dadurch gekennzeichnet, dass** die Vorrichtung ferner umfasst:
- Motormittel (14) zum Bewegen des beweglichen Greifglieds (8) von der Einführposition in die Halteposition und zum Bewegen eines oder beider Greifglieder (8, 12) von der Ruheposition in die Aufnahmeposition des Rupffingers (10),
wobei der Arbeitsabschnitt (2) eine freie Kante (16) umfasst, die eine Anlagefläche bzw. -oberfläche (18), beispielsweise von ringförmiger Form, begrenzt, welche die distale Öffnung (6) zumindest teilweise umschreibt, und wobei die Bewegung des Greifglieds (8, 12) zu der der Aufnahmeposition hin erfolgt, während es sich von der Oberfläche (18) wegbewegt,
wobei das bewegliche Greifglied (8) in der Halteposition zu dem anderen Greifglied (12) angrenzend bzw. benachbart ist und wobei die Motormittel (14) so handhabbar sind, dass das Greifglied (8, 12) erst zu der Aufnahmeposition hin bewegt wird, nachdem die Halteposition erreicht wurde,
wobei das bewegliche Greifglied (8) drehbar (um eine Achse R1) an einem Führungselement (20) des Arbeitsabschnitts (2) zwischen der Halteposition und der Einführposition montiert ist, und wobei das Führungselement (20) verschiebbar entlang der vorherrschenden Verlängerungsachse (X) montiert ist, und zwar integral mit dem Greifglied (8, 12) zu der Aufnahmeposition hin.

2. Vorrichtung nach einem der vorhergehenden Ansprüche, wobei der Arbeitsabschnitt (2) ein Führungselement (20) umfasst, das eine Arbeitsfläche bzw. -oberfläche (22) des anderen Greifglieds (12) begrenzt, und wobei die Arbeitsfläche (22) in dem Innenfach (4) integral zu bzw. mit dem Führungselement (20) proximal bewegbar ist.

3. Vorrichtung nach dem vorhergehenden Anspruch, wobei das Führungselement (20) eine konkave Fläche bzw. Oberfläche (24) begrenzt, innerhalb der die Arbeitsfläche (22) zumindest teilweise untergebracht ist, und wobei letztere halbzylindrisch mit einer Halbzylinderachse (C) im Wesentlichen orthogonal zu der vorherrschenden Erstreckungsachse (X) ist.

4. Vorrichtung nach Anspruch 1 oder 2, wobei das Führungselement (20) verschiebbar/beweglich in dem Innenfach (4) untergebracht ist und durch eine Axialbewegung (A) der Motormittel (14) zwischen der Ruheposition und der Aufnahmeposition und umgekehrt bewegt wird.

5. Vorrichtung nach einem der vorhergehenden Ansprüche, wobei das Führungselement (20) durch das bewegliche Greifglied (8) kinematisch mit den Motormitteln (14) verbunden ist, wobei das Glied an einem Ende (24) an dem Führungselement (20) angelenkt (R1) ist und an einem anderen Ende (26) mittels eines oder mehrerer optionaler Übertragungselemente (28, 30) an den Motormitteln (14) angelenkt (R2) ist.

6. Vorrichtung nach einem der vorhergehenden Ansprüche, wobei das Führungselement (20) einen im Wesentlichen zylindrischen Körper (32) umfasst, der ein Zylinderfach (34) begrenzt, wobei der Körper (32) in seiner eigenen Dicke zumindest einen Längsschlitz (36) definiert, durch den das Greifglied (8) zwischen der Einführposition und der Halteposition bewegbar ist.

7. Vorrichtung nach einem der vorhergehenden Ansprüche, wobei das Führungselement (20) eine distale Zugangsöffnung (38) begrenzt, durch die der Rupffinger (10) in ein Zylinderfach (34) eingeführt werden kann, das durch das Element (20) begrenzt ist, um durch die Greifglieder (8, 12) gehalten zu sein.

8. Vorrichtung nach den Ansprüchen 5 und 6, wobei der Längsschlitz (36) teilweise das bewegliche Greifglied (8) und zumindest ein Übertragungselement (28) für die Bewegung der Motormittel (14) beherbergt.

9. Vorrichtung nach einem der vorhergehenden Ansprüche, wobei das bewegliche Greifglied (8) teilweise aus dem Innenfach (4) herausragt und wobei der Arbeitsabschnitt (2) entlang des Innenfachs (4) ein Schutzgehäuse (40) umfasst und wobei bzw. in dem das Greifglied (8) zumindest zwischen der Ruheposition und der Aufnahmeposition bewegbar oder verschiebbar ist.

10. Vorrichtung nach einem der vorhergehenden Ansprüche, wobei die Motormittel (14) eine einzelne Motoreinheit (42) zum Bewegen des Greifglieds (8) von der Einführposition in die Halteposition und umgekehrt und zum Bewegen des zumindest einen Greifglieds (8, 12) von der Ruheposition in die Aufnahmeposition des Rupffingers (10) und umgekehrt umfassen.

11. Vorrichtung nach einem der vorhergehenden Ansprüche, wobei die Motormittel (14) eine Motoreinheit (42) mit einem Linearantrieb (50) oder einem Drehantrieb umfassen, der hydraulisch, mechanisch oder pneumatisch aktiviert wird.

12. Vorrichtung nach einem der vorhergehenden Ansprüche, **dadurch gekennzeichnet, dass** sie eine tragbare Waffenvorrichtung ist.

## Revendications

1. Dispositif (1) pour saisir des doigts de plumeuse (10), comprenant :
- une partie de travail (2) qui délimite un compartiment intérieur (4) qui s'étend le long d'un axe d'extension prévalent (X) pour recevoir au moins partiellement un doigt de plumeuse (10), et une ouverture distale (6) pour insérer ledit doigt de plumeuse (10) dans le compartiment intérieur (4) ;
- au moins une paire d'organes de préhension (8, 12), dont au moins un est mobile entre une position d'insertion (Fig. 7f) du doigt de plumeuse (10), dans lequel l'organe de préhension mobile (8) est espacé de l'autre organe de préhension (12), et une position de maintien (Fig. 7a), dans lequel lesdits organes (8, 12) coopèrent pour maintenir le doigt (10) dans le compartiment intérieur (4), et vice versa ; dans lequel l'un des organes de préhension (8, 12) ou les deux sont en outre mobiles entre une position de repos (Fig. 7b) et une position de saisie (Fig. 7d), dans lequel ledit au moins un organe de préhension (8, 12) est déplacé de manière proximale dans le compartiment intérieur (4), et vice versa ; **caractérisé en ce que** le dispositif comprend en outre :
des moyens moteurs (14) pour déplacer l'organe de préhension mobile (8) de la position d'insertion à la position de maintien, et pour déplacer l'un des organes de préhension (8, 12) ou les deux de la position de repos à la position de saisie du doigt de plumeuse (10),
la partie de travail (2) comprend un bord libre (16) qui délimite une surface de butée (18), par exemple d'une forme annulaire, qui circonscrit au moins partiellement l'ouverture distale (6), et dans lequel le déplacement de l'organe de préhension (8, 12) vers la position de saisie se produit pendant qu'il s'éloigne de ladite surface (18),
dans lequel l'organe de préhension mobile (8) est adjacent à l'autre organe de préhension (12) dans la position de maintien, et dans lequel les moyens moteurs (14) peuvent servir à ce que l'organe de préhension (8, 12) soit déplacé vers la position de saisie uniquement après que la position de maintien a été atteinte,
dans lequel l'organe de préhension mobile (8) est monté de manière rotative (autour d'un axe R1) sur un élément guide (20) de la partie de travail (2) entre la position de maintien et la position d'insertion, et dans lequel l'élément guide (20) est monté de manière coulissante le long de l'axe d'extension prévalent (X), d'un seul bloc avec l'organe de préhension (8, 12) vers la position de saisie.

2. Dispositif selon l'une quelconque des revendications précédentes, dans lequel la partie de travail (2) comprend un élément guide (20) qui délimite une surface de travail (22) de l'autre organe de préhension (12), et dans lequel ladite surface de travail (22) est mobile de manière proximale dans le compartiment intérieur (4) d'un seul bloc avec l'élément guide (20).

3. Dispositif selon la revendication précédente, dans lequel l'élément guide (20) délimite une surface concave (24) dans laquelle la surface de travail (22) est au moins partiellement contenue, et dans lequel cette dernière est semi-cylindrique avec un axe de semi-cylindrique (C) sensiblement orthogonal à l'axe d'extension prévalent (X).

4. Dispositif selon les revendications 1 ou 2, dans lequel l'élément guide (20) est contenu de manière coulissante/de manière mobile dans le compartiment intérieur (4) et est déplacé entre la position de repos et la position de saisie, et vice versa, par le biais d'un déplacement axial (A) des moyens moteurs (14).

5. Dispositif selon l'une quelconque des revendications précédentes, dans lequel l'élément guide (20) est relié de manière cinématique aux moyens moteurs (14) par le biais de l'organe de préhension mobile (8), ledit organe étant articulé (R1) sur une extrémité (24) à l'élément guide (20) et articulé (R2) sur une autre extrémité (26) aux moyens moteurs (14) au moyen d'un ou de plusieurs éléments de transmission facultatifs (28, 30).

6. Dispositif selon l'une quelconque des revendications précédentes, dans lequel l'élément guide (20) comprend un corps sensiblement cylindrique (32) délimitant un compartiment de cylindre (34), dans lequel ledit corps (32) définit dans sa propre épaisseur au moins une fente longitudinale (36) à travers laquelle l'organe de préhension (8) est mobile entre la position d'insertion et la position de maintien.

7. Dispositif selon l'une quelconque des revendications précédentes, dans lequel l'élément guide (20) délimite une ouverture d'accès distale (38) à travers laquelle le doigt de plumeuse (10) peut être inséré dans un compartiment de cylindre (34) délimité par ledit élément (20) devant être maintenu par les organes de préhension (8, 12).

8. Dispositif selon les revendications 5 et 6, dans lequel la fente longitudinale (36) contient partiellement l'organe de préhension mobile (8) et au moins un élément de transmission (28) pour le déplacement des moyens moteurs (14).

9. Dispositif selon l'une quelconque des revendications précédentes, dans lequel l'organe de préhension mobile (8) fait saillie partiellement hors du compartiment intérieur (4), et dans lequel la partie de travail (2) comprend un boîtier protecteur (40) à côté du compartiment intérieur (4) et dans lequel l'organe de préhension (8) est mobile ou peut coulisser au moins entre la position de repos et la position de saisie.

10. Dispositif selon l'une quelconque des revendications précédentes, dans lequel les moyens moteurs (14) comprennent une seule unité de moteur (42) pour déplacer l'organe de préhension (8) de la position d'insertion à la position de maintien, et vice versa, et pour déplacer l'au moins un organe de préhension (8, 12) de la position de repos à la position de saisie du doigt de plumeuse (10), et vice versa.

11. Dispositif selon l'une quelconque des revendications précédentes, dans lequel les moyens moteurs (14) comprennent une unité de moteur (42) avec un actionneur linéaire (50) ou avec un actionneur rotatif activé de manière hydraulique, de manière mécanique ou de manière pneumatique.

12. Dispositif selon l'une quelconque des revendications précédentes, **caractérisé en ce qu'**il s'agit d'un dispositif pistolet portatif.
